# EUROPEAN PATENT SPECIFICATION

(11) **EP 1 395 370 B1**
(45) Date of publication and mention of the grant of the patent: **16.12.2009**
(21) Application number: 02730661.2
(22) Date of filing: 14.05.2002
(51) Int. Cl.: B05B 1/10, B60S 1/46, B60S 1/52, B60S 1/34, B60S 1/36

(54) **SYSTEM AND METHOD FOR CLEANING OR DE-ICING A WINDSHIELD**
SYSTEM UND VERFAHREN ZUR REINIGUNG ODER ENTEISUNG EINER WINDSCHUTZSCHEIBE
SYSTEME ET PROCEDE DE NETTOYAGE OU DE DEGIVRAGE D'UN PARE-BRISE

(30) Priority: 14.05.2001 US 290705 P
(43) Date of publication of application: 10.03.2004
(73) Proprietor: M-Heat Investors, LLC, Bettendorf, IA 52722 (US)
(72) Inventor: ARKASHEVSKI, Uri, 49302 Petach Tikva (IL); ROGOZINSKI, Joseph, 52366 Ramat Gan (IL); IVANOV, Vychislav, Kiryat Tivon 36083 (IL)
(74) Representative: Lord, Hilton David
(86) International application number: PCT/IL2002/000370
(87) International publication number: WO 2002/092237

(56) References cited:
- WO-A-00/15479
- DE-A- 3 324 634
- DE-C- 3 634 404
- US-A- 2 607 944
- US-A- 3 427 675
- US-A- 3 716 886
- US-A- 4 922 570
- US-A- 5 203 049
- US-A- 6 164 564
- PATENT ABSTRACTS OF JAPAN vol. 2000, no. 09, 13 October 2000 (2000-10-13) & JP 2000 177538 A (ASMO CO LTD), 27 June 2000 (2000-06-27)

## Description

### FIELD OF THE INVENTION

The present invention relates to vehicle windshield washers, cleaners and de-icers generally.

### BACKGROUND OF THE INVENTION

The following Patent documents are believed to be relevant to the subject matter of the present invention:
U.S Patents:

| | | | | | |
|---|---|---|---|---|---|
| 653,629; | 1,636,190; | 3,202,447; | 3,332,045; | 3,977,436; | 3,979,068; |
| 4,090,668; | 4,106,508; | 4,159,026; | 4,253,493; | 4,295,111; | 4,306,589; |
| 4,403,756; | 4,489,863; | 4,561,632; | 4,534,539; | 4,524,797; | 4,574,841; |
| 4,690,371; | 4,877,186; | 5,012,977; | 5,118,040; | 5,280,806; | 5,254,083; |
| 5,318,071; | 5,345,968; | 5,351,934; | 5,354,965; | 5,383,247; | 5,509,606; |
| 5,727,769; | 5,784,751; | 5,927,608; | 5,947,348; | 5,957,384; | 5,988,529; |
| 6,133,546; | 6,164,564. | | | | |
| JP 2-53656; | JP 2-234866; | JP 63-93652; | JP 83-12824; | GB 1,451,666. | |

A windshield washing system according to the preamble of claim 1 is disclosed in DE 3634404C.

### SUMMARY OF THE INVENTION

The present invention seeks to provide an improved vehicle windshield washing system and method for windshield washing.

For the purpose of this patent application the term "windshield" is given a broader meaning than usual and refers to any window, mirror or headlight surface of a vehicle.

There is thus provided in accordance with a preferred embodiment of the present invention a windshield washing system including a windshield wiper and sprayer assembly including a windshield wiper assembly, a windshield wiper driver assembly operative to move the windshield wiper assembly in rotational and linear motion along a vehicle windshield, a windshield sprayer assembly mounted on the windshield wiper assembly. The windshield sprayer assembly includes at least one sprayer, which includes a sprayer housing and a sprayer housing closure arranged for selectable positioning relative to the sprayer housing and to assume a first position permitting spraying and a second position not permitting spraying. The windshield washing system also includes a windshield sprayer assembly positioning assembly operative in response to the linear motion of the windshield wiper assembly for selectably positioning the sprayer housing closure relative to the sprayer housing in either of the first and second positions in accordance with the rotational position of the windshield wiper assembly.

There is also provided in accordance with a preferred embodiment of the present invention a method for windshield washing, which includes providing a windshield wiper assembly having mounted thereon a windshield sprayer assembly including at least one sprayer, including a sprayer housing and a sprayer housing closure movable relative to the sprayer housing, the sprayer housing closure providing a first position permitting spraying and a second position not permitting spraying, moving the windshield wiper assembly in rotational and linear motion along a vehicle windshield and selectably positioning the sprayer housing closure relative to the sprayer housing in either of the first and second positions in response to the linear motion of the windshield wiper assembly in accordance with the rotational position of the windshield wiper assembly.

Further in accordance with a preferred embodiment of the present invention the windshield wiper and sprayer assembly includes a base, which is arranged for rotation about a rotation axis.

Typically, the base is driven for reciprocating rotational motion by a conventional wiper drive assembly, forming part of a conventional motor vehicle.

Still further in accordance with a preferred embodiment of the present invention the windshield wiper and sprayer assembly includes a base mounted housing, which cooperates with the base and arranged for driven linear motion relative thereto.

Typically, the driven linear motion of the base mounted housing relative to the base is provided by a cam drive assembly.

Additionally in accordance with a preferred embodiment of the present invention the windshield wiper and sprayer assembly also includes a support arm, fixed to the base mounted housing for linear and rotational motion therewith.

Additionally or alternatively, the sprayer includes at least one heated liquid sprayer, which undergoes linear and rotational motion together with the base mounted housing and which receives pressurized fluid for spraying via fluid conduits.

Further in accordance with a preferred embodiment of the present invention the windshield sprayer assembly positioning assembly includes an upstanding pin fixed to the base for rotary motion together therewith, the upstanding pin slidably engaging a base mounted housing slot formed in a bottom surface of the base mounted housing.

Preferably, the upstanding pin also slidingly engages an anchor element slot formed in an anchor element, which anchor element is linearly slidable relative to the base mounted housing and to the base along an axis generally parallel to the anchor element slot.

Additionally in accordance with a preferred embodiment of the present invention at least one compression wire is coupled to the anchor element and the at least one compression wire extends through at least one sleeve to the windshield sprayer assembly and being operative for controlling the positioning of the sprayer housing closure relative to the sprayer housing.

Typically, the windshield sprayer assembly includes a pressurized fluid chamber, which is defined between the sprayer housing and the sprayer housing closure, the pressurized fluid chamber receiving pressurized fluid to be sprayed from a fluid conduit via an inlet pipe.

Further in accordance with a preferred embodiment of the present invention the sprayer housing closure includes a cap which may be sealed and may be held tight against a corresponding sealing surface of the sprayer housing.

Still further in accordance with a preferred embodiment of the present invention the cap is arranged to be sealed and to be held tight by a spring loaded shaft assembly, which includes a compression spring.

Additionally in accordance with a preferred embodiment of the present invention the sprayer housing closure is normally positioned relative to the sprayer housing in the first position permitting spraying by operation of a spring loaded lever assembly, attached to an end of a compression wire.

Still further in accordance with a preferred embodiment of the present invention the spring loaded lever assembly includes a compression spring which normally urges a lever arm forward in engagement with a spring loaded shaft assembly, thereby overcoming the spring force of a further spring and urging the sprayer housing closure away from the sprayer housing.

Typically, the spring force of the further spring exceeds the spring force of the compression spring.

Additionally when the base mounted housing is at an extreme inward radial orientation, the engagement of the upstanding pin at a radial outward end of the anchor element slot applies a compressive force to a compression wire, which compressive force is sufficient to overcome the spring force of the further spring and to force the lever arm to an orientation wherein it does not engage the spring loaded shaft assembly and does not overcome the spring force of the compression spring, thereby enabling the compression spring to seal the sprayer housing closure against the sprayer housing.

Still when base mounted housing is at the extreme inward radial orientation, both the anchor element and the base mounted housing are in their extreme retracted positions and a first separation is defined between an outward facing surface of the anchor element and an inner facing surface of the outer facing wall of the base mounted housing.

Further in the base mounted housing moves radially outward from the extreme inward radial orientation, the anchor element is slidable relative to the base mounted housing and a second separation, greater than the first separation, is defined between an outward facing surface of the anchor element and an inner facing surface of the outer facing wall of the base mounted housing.

Preferably, the anchor element is slidable relative to the base mounted housing and moves radially outwardly together with the base mounted housing.

Further in accordance with a preferred embodiment of the present invention the pin engages the anchor element slot to provide a lost motion mechanism, whereby tensioning of the compression wires is avoided.

Still further in accordance with a preferred embodiment of the present invention the lost motion mechanism produces a liquid spray by allowing the pressurized fluid to escape from the pressurized fluid chamber.

Typically, the base mounted housing travels radially relative to the base.

Preferably, sufficient liquid pressure applied to the pressurized fluid chamber overcomes the spring force of the compression spring and permits spraying even when the sprayer housing is in the second position.

Additionally or alternatively, the sprayer at least one sprayer includes an electrical heating element for heating thereof.

Typically, the electrical heating element is coupled to a source of electrical power by an electrical conductor.

Still further the step for windshield spraying also includes receiving pressurized fluid into the at least one sprayer and spraying the pressurized fluid onto the vehicle windshield.

Still further the windshield sprayer assembly positioning assembly includes push buttons which are arranged to be depressed by engagement with an engagement member when the windshield wiper assembly reaches an extreme position.

Additionally when the windshield wiper assembly is at at least one extreme position, the engagement of the engagement member with the push buttons applies a compressive force to a compression wire, which compressive force is sufficient to overcome the spring force of the further spring and to force the lever arm to an orientation wherein it does not engage the spring loaded shaft assembly and does not overcome the spring force of the compression spring, thereby enabling the compression spring to seal the sprayer housing closure against sprayer housing.

Typically, sufficient liquid pressure is applied to the pressurized fluid chamber and overcomes the spring force of the compression spring and permits spraying even when the sprayer housing is in the second position.

Further the step for receiving pressurized fluid into the at least one sprayer and spraying the pressurized fluid onto the vehicle windshield.

### BRIEF DESCRIPTION OF THE DRAWINGS

The present invention will be understood and appreciated more fully from the following detailed description, taken in conjunction with the drawings in which:
Figs. 1A, 1B and 1C are simplified illustrations of a windshield wiper and sprayer assembly constructed and operative in accordance with a preferred embodiment of the present invention, in a first operative orientation, Fig. 1A being a partially cut-away pictorial illustration and Figs. 1B and 1C being sectional illustrations taken along lines IB - IB and IC - IC in Fig. 1A, respectively;
Figs. 2A, 2B and 2C are simplified illustrations of the windshield wiper and sprayer assembly of Figs. 1A - 1C in a second operative orientation, Fig. 2A being a partially cut-away pictorial illustration and Figs. 2B and 2C being sectional illustrations taken along lines IIB - IIB and IIC - IIC in Fig. 2A, respectively;
Figs. 3A, 3B and 3C are simplified illustrations of the windshield wiper and sprayer assembly of Figs. 1A - 1C in a third operative orientation, Fig. 3A being a partially cut-away pictorial illustration and Figs. 3B and 3C being sectional illustrations taken along lines IIIB - IIIB and IIIC - IIIC in Fig. 3A, respectively;
Fig. 4A is a simplified illustration of the windshield wiper and sprayer assembly of Figs. 1A - 3C in various operative orientations in accordance with a preferred embodiment of the present invention;
Fig. 4B is a simplified illustration of a variation of the windshield wiper and sprayer assembly of Figs. 1A - 3C in various operative orientations in accordance with a preferred embodiment of the present invention;
Figs. 5A and 5B are simplified illustrations of a windshield wiper and sprayer assembly constructed and operative in accordance with another preferred embodiment of the present invention, in a first operative orientation, Fig. 5A being a partially cut-away pictorial illustration and Fig. 5B being a sectional illustration taken along lines VB - VB in Fig. 5A;
Figs. 6A and 6B are simplified illustrations of the windshield wiper and sprayer assembly of Figs. 5A and 5B in a second operative orientation, Fig. 6A being a partially cut-away pictorial illustration and Fig. 6B being a sectional illustration taken along lines VIB - VIB in Fig. 6A;
Fig. 7A is a simplified illustration of the windshield wiper and sprayer assembly of Figs. 5A and 6B in various operative orientations in accordance with a preferred embodiment of the present invention;
Fig. 7B is a simplified illustration of a variation of the windshield wiper and sprayer assembly of Figs. 5A and 6B in various operative orientations in accordance with another preferred embodiment of the present invention;
Fig. 8 is a simplified sectional illustration of a liquid heating assembly useful with the windshield wiper and sprayer assemblies of Figs. 1A - 7B, constructed and operative in accordance with a preferred embodiment of the present invention;
Figs. 9A and 9B are simplified illustrations of two alternative embodiments of a cylindrical wall portion of a liquid heating volume defining subassembly employed in the liquid heating assembly of Fig. 8;
Figs. 10A, 10B, 10C, 10D, 10E and 10F are simplified timing diagrams illustrating various modes of operation of the liquid heating assembly of Fig. 8;
Fig. 19 is a simplified flow chart illustration of standby operation of the liquid heating assembly of Fig. 8.

### DETAILED DESCRIPTION OF PREFERRED EMBODIMENTS

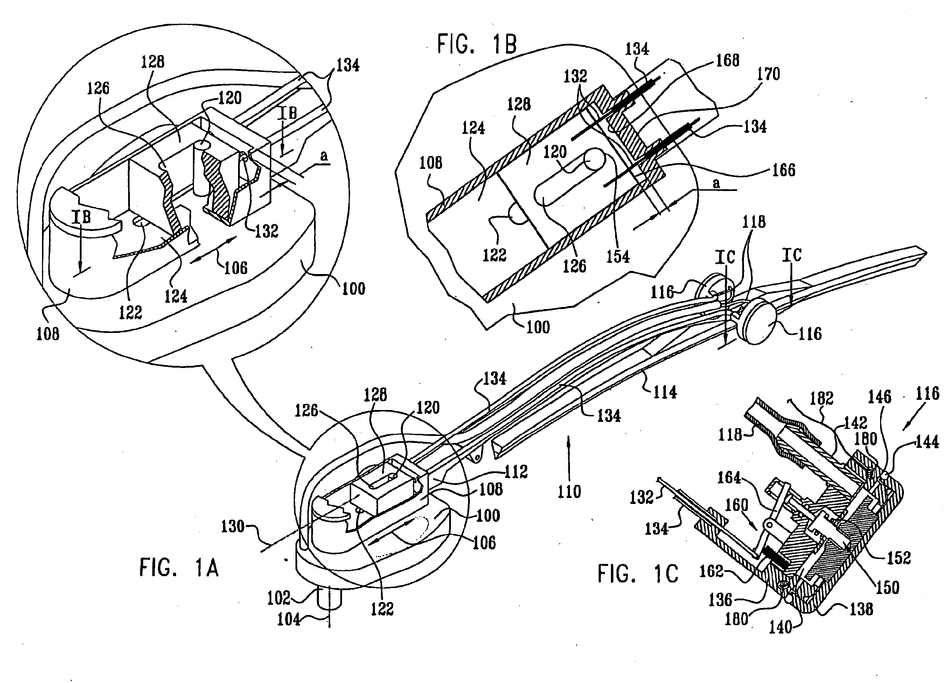

Reference is now made to Figs. 1A, 1B and 1C, 2A, 2B and 2C and 3A, 3B and 3C, which are simplified illustrations of a windshield wiper and sprayer assembly constructed and operative in accordance with a preferred embodiment of the present invention, in closed and open operative orientations, Figs. 1A, 2A and 3A being partially cut-away pictorial illustrations and Figs. 1B, 2B and 3B and 1C, 2C and 3C being sectional illustrations taken along lines IB - IB and IC - IC, IIB - IIB and IIC - IIC and IIIB - IIIB and IIIC - IIIC, respectively.

For the purpose of this patent application the term "windshield" is given a broader meaning than usual and refers to any window, mirror or headlight surface of a vehicle.

As seen in Figs. 1A - 1C, 2A - 2C and 3A - 3C, the windshield wiper and sprayer assembly comprises a base 100 which is fixed to a shaft 102 which is arranged for rotation about a rotation axis 104. Shaft 102 is preferably driven for reciprocating rotational motion by a conventional wiper drive assembly (not shown), forming part of a conventional motor vehicle.

Cooperating with base 100 and arranged for driven linear motion relative thereto, as indicated by arrows 106; is a housing 108. The linear motion of base mounted housing 108 relative to base 100 preferably has a maximum amplitude of approximately 70 mm. This linear motion is preferably provided by a cam drive assembly (not shown). Suitable drive assemblies of this type are commercially available on windshield wiper assemblies installed as original equipment on Mercedes-Benz automobiles, such as Model No. 220C.

Fixed to base mounted housing 108 for linear and rotational motion therewith is a windshield wiper and heated liquid sprayer assembly 110 including a support arm 112 mounted onto housing 108. Assembly 110 preferably includes a windshield wiper assembly 114 and a pair of heated liquid spray assemblies 116, all of which undergo linear and rotational motion together with housing 108. Spray assemblies 116 receive pressurized fluid for spraying via fluid conduits 118.

Also fixed to base 100 for rotary motion together therewith is an upstanding pin 120, which slidably engages a base mounted housing slot 122 formed in a bottom surface 124 of base mounted housing 108. In the illustrated embodiment, base mounted housing slot 122 is at least approximately 70 mm. in length. Pin 120 also slidingly engages an anchor element slot 126 in an anchor element 128. Anchor element 128 is preferably linearly slidable relative to base mounted housing 108 and to base 100 along an axis 130 parallel to arrows 106 and parallel to base mounted housing slot 122.

Coupled to anchor element 128 are a pair of compression wires 132 which extend through respective coaxial sleeves 134 to respective normally open spray assemblies 116 and are operative for controlling the closing and opening of the spray assemblies.

Referring particularly to Figs. 1C, 2C and 3C, it is seen that spray assemblies 116 each comprise a sprayer housing 136 and a cap portion 138 which is selectably closed by the action of compression wires 132.

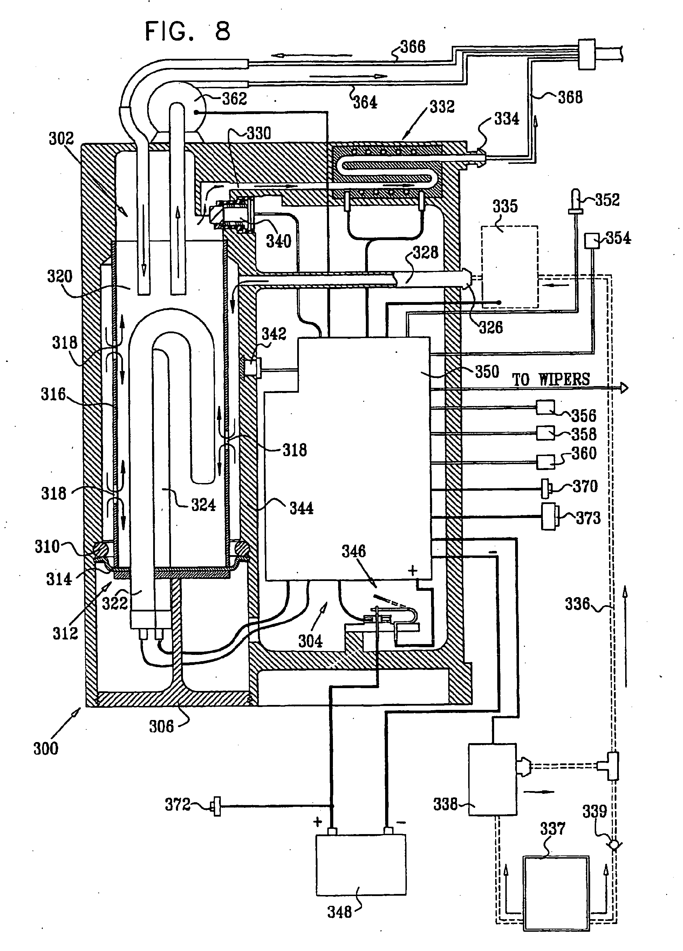

In the preferred embodiment of the invention illustrated in Figs. 1C, 2C and 3C, it is seen that a pressurized fluid chamber 140 is defined between the sprayer housing 136 and the cap 138 and receives pressurized fluid to be sprayed from the fluid conduit 118 via an inlet pipe 142. The cap 138 may be sealed, preferably by means of an O-ring 144, and may be held tight against a corresponding sealing surface 146 of sprayer housing 136 by a spring loaded shaft assembly 150, which includes a compression spring 152. The sealing of the cap 138 typically prevents evaporation of the liquid, penetration of dirt into the liquid spray assemblies 116 and return of the liquid from the resevoir 337, as described hereinbelow with respect to Fig. 8.

As noted above, each spray assembly 116 is normally open. This normally open state is the result of the action of the spring loaded lever assembly 160, attached to an end of each compression wire 132. Spring loaded lever assembly 160 preferably comprises a compression spring 162 which normally urges a lever arm 164 to engage spring loaded shaft assembly 150, thereby overcoming the spring force of spring 152 and urging the cap 138 away from sprayer housing 136. In the illustrated embodiment, the spring force of compression spring 162 exceeds that of compression spring 152.

Figs. 1A - 1C show base mounted housing 108 and windshield wiper and heated liquid sprayer assembly 110 at extreme inward radial orientations. In this orientation, the engagement of pin 120 at the radial outward end 154 of anchor element slot 126 in anchor element 128 applies a compressive force to compression wires 132 sufficient to overcome the spring force of compression spring 162 and to force lever arm 164 to an orientation wherein it does not engage spring loaded shaft assembly 150 and does not overcome the spring force of spring 152. Spring 152 thus seals cap 138 against sprayer housing 136, as shown in Fig. 1C.

In this operative orientation, as seen in Fig. 1B, both anchor element 128 and base mounted housing 108 are in their extreme retracted positions and a separation "a" is defined between the outward facing surface 166 of anchor element 128 and the inner facing surface 168 of the outer facing wall 170 of base mounted housing 108.

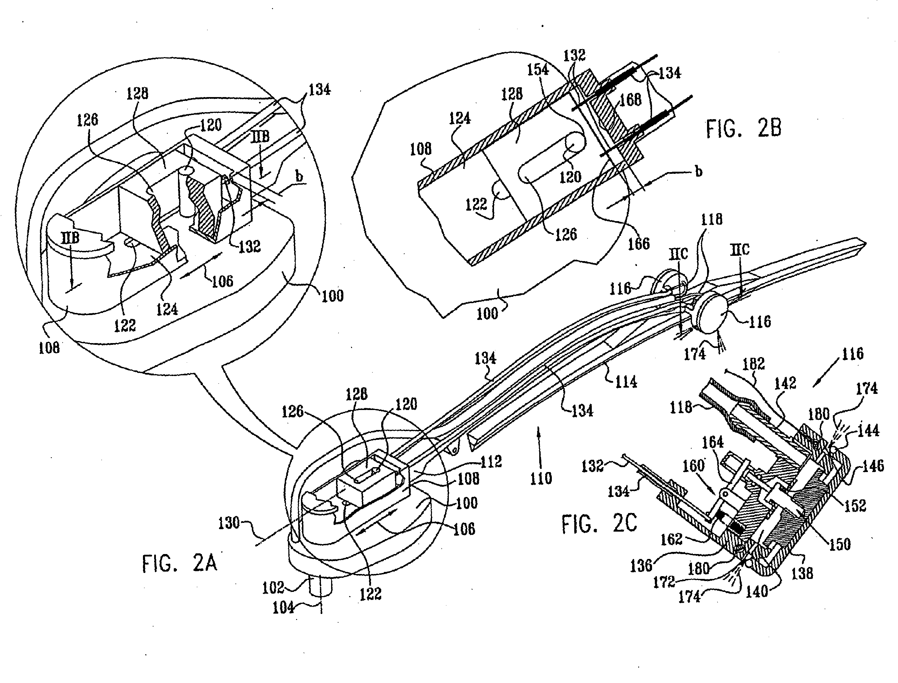

Upon initial radial outward movement of housing 108, support arm 112 and spray assemblies 116, inasmuch as anchor element 128 is slidable relative to the base mounted housing 108, it need not and does not move radially outwardly together with housing 108 and thus the separation "a" in Fig. 1B increases to "b", as shown in Fig. 2B.

As seen in Figs 2A, 2B and 2C, pin 120 remains in engagement with the radial outward end of slot 154 in anchor element 128, while base mounted housing 108 and the spray assemblies 116 move radially outwardly. This reduces or eliminates the compressive force to compression wires 132 and enables compression spring 162 to extend and to force lever arm 164 to an orientation wherein it engages spring loaded shaft assembly 150, thereby overcoming the spring force of spring 152 and urging the cap 138 away from sprayer housing 136 as shown in Fig. 2C, thereby allowing pressurized liquid to escape from pressurized fluid chamber 140 via conduits 172 and to produce a liquid spray 174.

Typically the amount of radial travel of housing 108 between the orientations of Figs. 1A - 1C and Figs. 2A - 2C relative to base 100 is approximately 5 mm. In the illustrated embodiment, the orientation of lever arm 164 is such that the resulting closed to open travel of cap portion 138 relative to housing portion 136 is also approximately 5 mm.

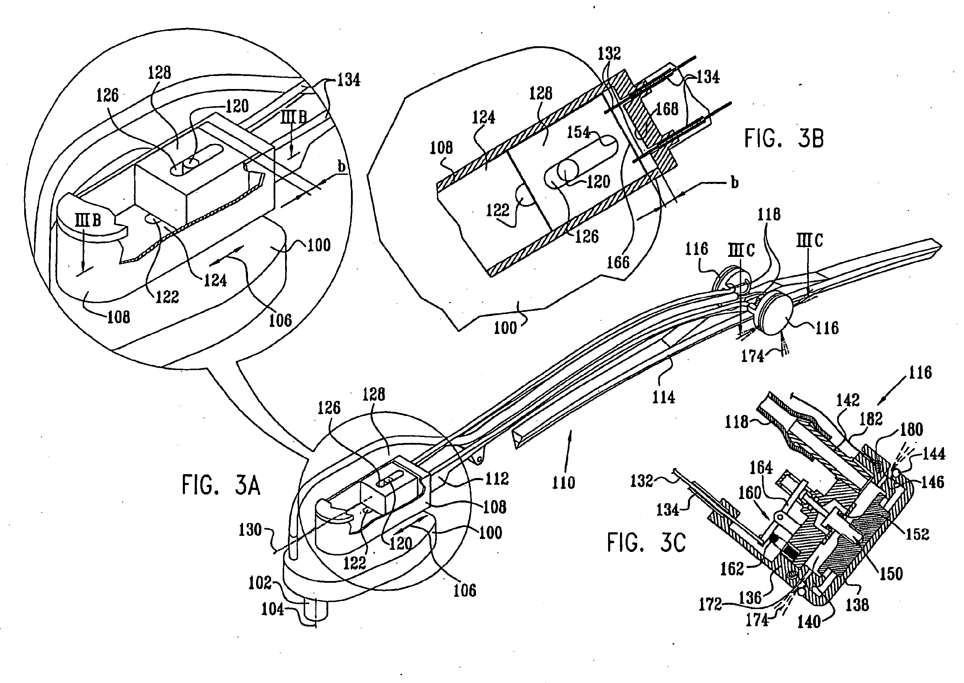

Upon further radial outward movement of housing 108, support arm 112 and spray assemblies 116, notwithstanding that anchor element 128 is slidable relative to the housing 108, it moves radially outwardly together with base mounted housing 108. As seen in Figs 3A, 3B and 3C, pin 120 remains in engagement with slot 126 in anchor element 128, but its position along that slot changes to the extent of the further radial outward movement, as base mounted housing 108 and the spray assemblies 116 move radially outwardly. The engagement of pin 120 with anchor element slot 126 thus may be appreciated to provide a lost motion mechanism, whereby tensioning of compression wires 132 is avoided, while maintaining the distance "b" between the outward facing surface 166 and the inner facing surface 168.

During this further radial outward movement of base mounted housing 108, compression wires 132 remain generally unstressed and compression spring 162 remains extended and continues to force lever arm 164 to an orientation wherein it engages spring loaded shaft assembly 150, thereby overcoming the spring force of spring 152 and urging the cap 138 away from sprayer housing 136 as shown in Fig. 3C, thereby allowing pressurized liquid to escape from pressurized fluid chamber 140 via conduits 172 and to produce a liquid spray 174.

Typically the amount of radial travel of housing 108 relative to base 100, between the orientations of Figs. 2A - 2C and Figs. 3A - 3C, is approximately 65 mm. In the illustrated embodiment, the orientation of lever arm 164 is such that no further travel of cap portion 138 relative to housing portion 136 takes place.

It is a particular feature of the invention that even when the spray assembly 116 is in its closed position, sufficient liquid pressure applied to chamber 140 may overcome the spring force of spring 152 and permit spraying.

It is appreciated that the spray assemblies 116 may be heated by an electrical heating element 180 which may be coupled by an electrical conductor 182 to a source of electrical power (not shown). It is appreciated that the heating of the spray assembly 116 may also allow for the melting of ice, which may form around the spray assembly 116.

It is also apprecaited that other forms of heating the spray assembly 116 may be used.

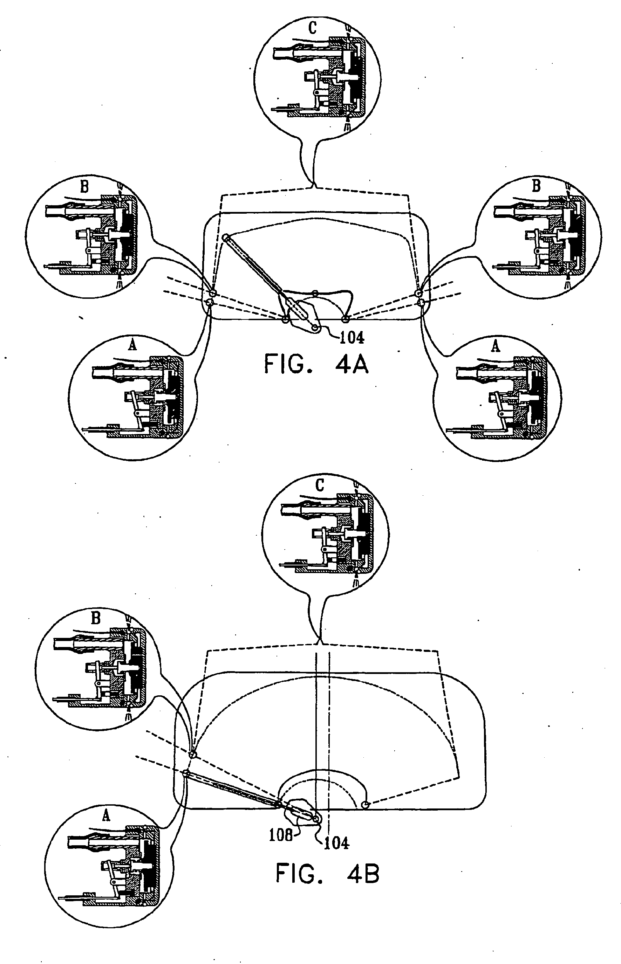

Reference is now made to Fig. 4A, which is a simplified illustration of the windshield wiper and sprayer assembly of Figs. 1A - 3C in various operative orientations in accordance with a preferred embodiment of the present invention. As seen in Fig. 4A, the orientations indicated by A correspond to the orientations shown in Figs. 1A - 1C; the orientations indicated by B correspond to the orientations shown in Figs. 2A - 2C and the range of orientations indicated by C correspond to the orientations shown in Fig. 3C.

Reference is now made to Fig. 4B, which is a simplified illustration of a variation of the windshield wiper and sprayer assembly of Figs. 1A - 3C in various operative orientations in accordance with a preferred embodiment of the present invention. The embodiment of Fig. 4B differs from that of Fig. 4A in that the location of rotation axis 104 (Fig. 1A) is slightly shifted to the side of the windshield, as compared to its location in the embodiment of Fig. 4A. The pattern of radial outward travel of housing 108 (Fig. 1A) produced by the cam drive assembly (not shown) is accordingly somewhat different.

In Fig. 4B, the orientation indicated by A corresponds to the orientations shown in Figs. 1A - 1C; the orientations indicated by B correspond to the orientations shown in Figs. 2A - 2C and the range of orientations indicated by C correspond to the orientations shown in Fig. 3C.

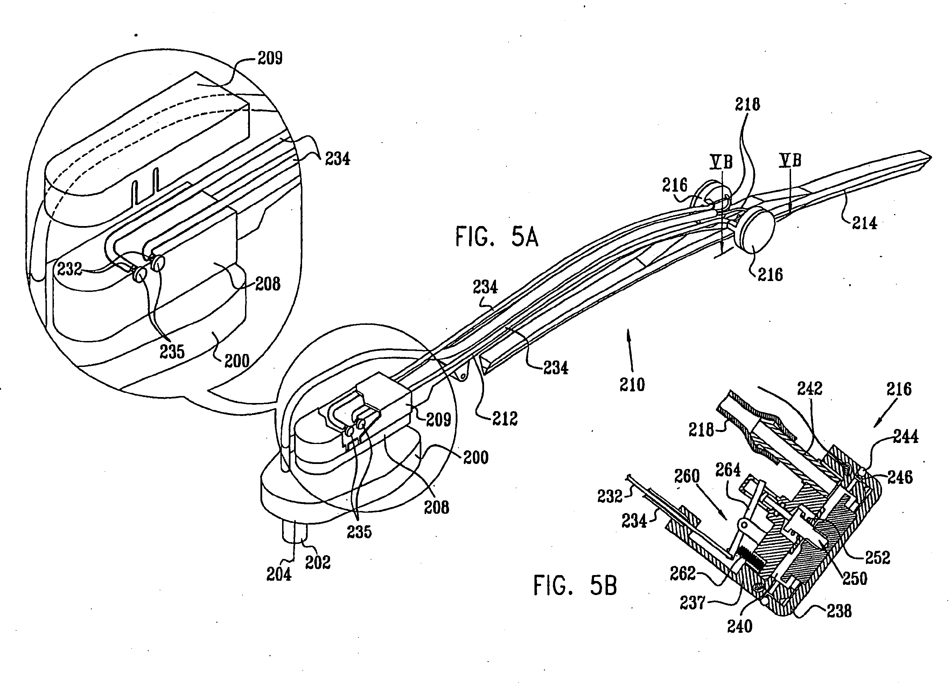

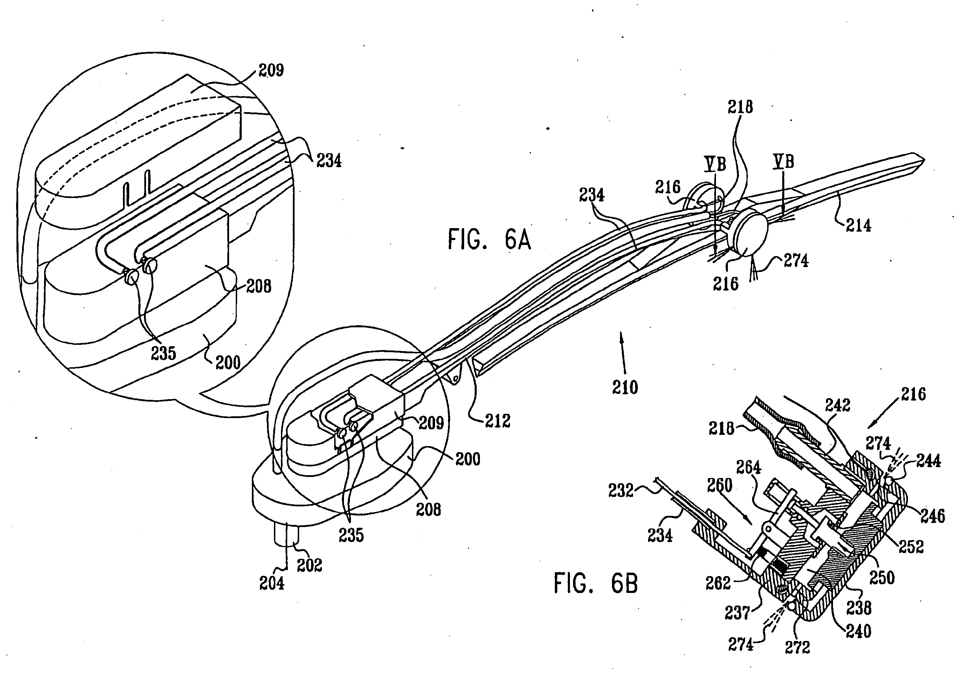

Reference is now made to Figs. 5A and 5B and 6A and 6B, which are simplified illustrations of a windshield wiper and sprayer assembly constructed and operative in accordance with another preferred embodiment of the present invention, in respective closed and open operative orientation, Figs. 5A and 6A being partially cut-away pictorial illustration and Figs. 5B and 6B being sectional illustrations taken along lines 5B-5B and 6B-6B respectively.

As seen in Figs. 5A - 6B, the windshield wiper and sprayer assembly comprises a base 200 which is fixed to a shaft 202 which is arranged for rotation about a rotation axis 204. Shaft 202 is preferably driven for reciprocating rotational motion by a conventional wiper drive assembly (not shown), forming part of a conventional motor vehicle.

Cooperating with base 200 and arranged for rotation together therewith about rotation axis 204, is a housing 208 having a cover 209.

Fixed to base mounted housing 208 for rotational motion therewith is a windshield wiper and heated liquid sprayer assembly 210 including a support arm 212 mounted onto base mounted housing 208. Assembly 210 preferably includes a windshield wiper assembly 214 and a pair of heated liquid spray assemblies 216, all of which undergo rotational motion together with base mounted housing 208. Spray assemblies 216 receive pressurized fluid for spraying via fluid conduits 218.

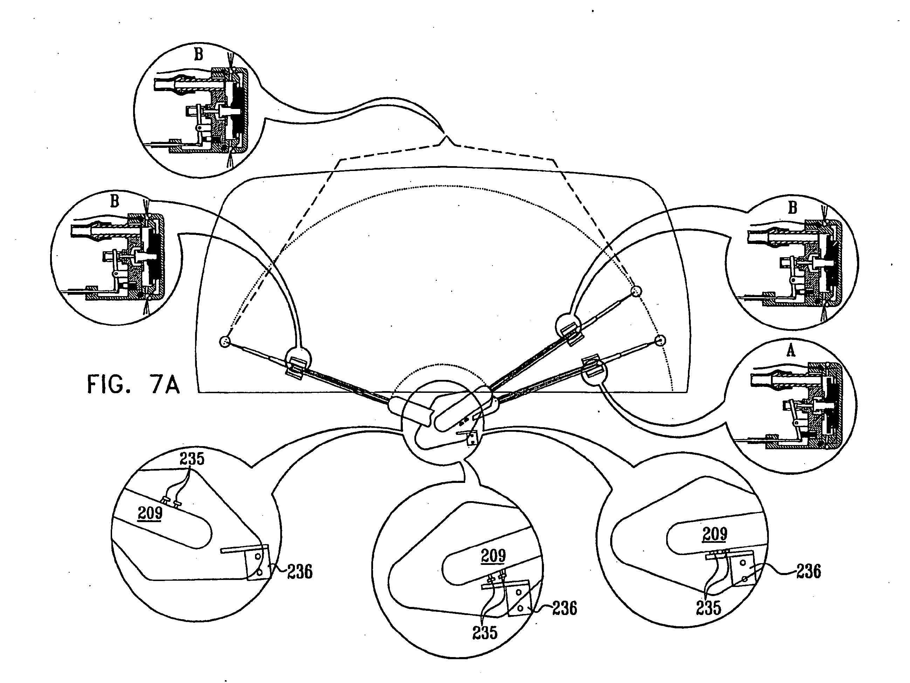

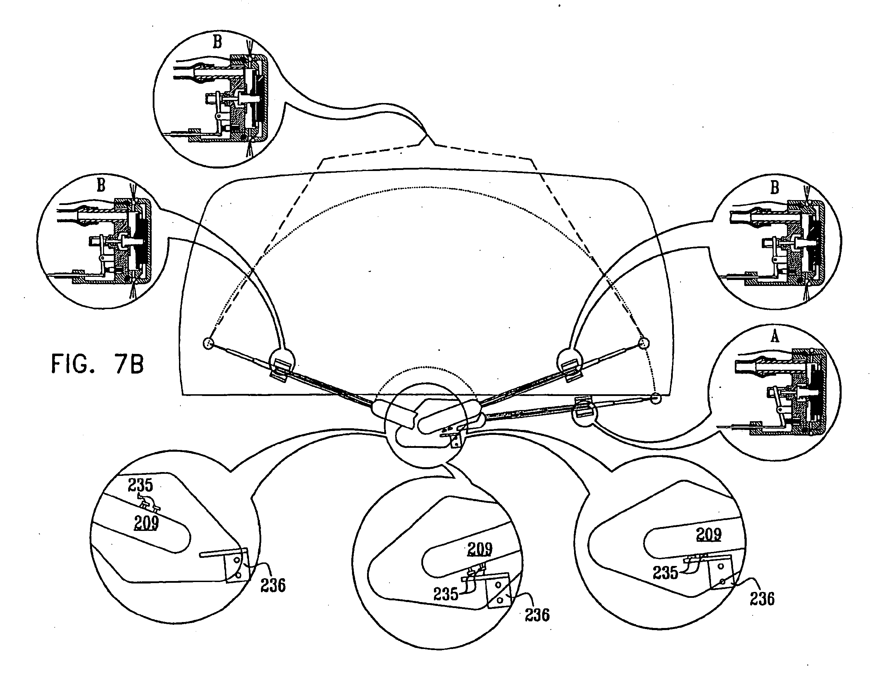

A pair of compression wires 232 extend through respective coaxial sleeves 234 from respective push buttons 235 mounted onto the base mounted housing 208 to spray assemblies 216. As will be explained hereinbelow, with particularly reference to Figs. 7A and 7B, push buttons 235 are arranged to be depressed by engagement with an engagement member 236 when the windshield wiper assembly 214 reaches an extreme clockwise position, in the sense of Figs. 7A and 7B, thereby sealing the spray assemblies 216.

Referring particularly to Figs. 5B and 6B, it is seen that spray assemblies 216 each comprise a sprayer housing 237 and a cap portion 238 which is selectably closed by the action of compression wires 232.

In the preferred embodiment of the invention illustrated in Figs. 5B and 6B, it is seen that a pressurized fluid chamber 240 is defined between the sprayer housing 237 and the cap 238 and receives pressurized fluid to be sprayed from the fluid conduits 218 via respective inlet pipes 242. The cap 238 may be sealed, preferably by means of an O-ring 244, and may be held tight against a corresponding sealing surface 246 of sprayer housing 237 by a spring loaded shaft assembly 250, which includes a compression spring 252.

As noted above, the spray assemblies 216 are normally open. This normally open state is the result of the action of a spring loaded lever assembly 260, attached to an end of each compression wire 232. Spring loaded lever assembly 260 preferably comprises a compression spring 262 which normally urges a lever arm 264 to engage the spring loaded shaft assembly 250, thereby overcoming the spring force of spring 252 and urging the cap 238 away from sprayer housing 237. In the illustrated embodiment, the spring force of compression spring 262 exceeds that of compression spring 252.

Figs. 5A and 5B show base mounted housing 208 and windshield wiper and heated liquid sprayer assembly 210 at extreme inward radial orientations. In this orientation, the depression of push buttons 235 applies a compressive force to compression wires 232 sufficient to overcome the spring force of compression spring 262 and to force lever arm 264 to an orientation wherein it does not engage spring loaded shaft assembly 250 and does not overcome the spring force of spring 252. Spring 252 thus seals cap 238 against sprayer housing 237, as shown in Fig. 5B.

Termination of depression of push buttons 235, resulting from counterclockwise movement of the windshield wiper from its extreme clockwise orientation releases the compressive force earlier applied to wires 232 and thus enables compression spring 262 to extend and to force lever arm 264 to an orientation wherein it does not engage spring loaded shaft assembly 250 and does not overcome the spring force of spring 252 and urging the cap 238 away from sprayer housing 237, as shown in Fig. 6B, thereby allowing pressurized liquid to escape from pressurized fluid chamber 240 via conduits 272 and to produce a liquid spray 274.

In the illustrated embodiment, the orientation of lever arm 264 is such that the resulting closed to open travel of cap portion 238 relative to sprayer housing 237 is approximately 5 mm.

During further rotational movement of housing 208, compression wires 232 remain generally unstressed and compression spring 262 remains extended and continues to force lever arm 264 to an orientation wherein it continues to engage spring loaded shaft assembly 250 thereby overcoming the spring force of spring 252. Spring 252 continues to space cap 238 from sprayer housing 237, as shown in Fig. 6B, thereby allowing pressurized liquid to escape from pressurized fluid chamber 240 via conduits 272 and to produce a liquid spray 274.

It is a particular feature of the invention that even when the spray assembly 216 is in its closed position, sufficient liquid pressure applied to chamber 240 may overcome the spring force of spring 252 and permit spraying.

Reference is now made to Fig. 7A, which is a simplified illustration of the windshield wiper and sprayer assembly of Figs. 5A - 6B in various operative orientations in accordance with a preferred embodiment of the present invention. As seen in Fig. 7A, the orientation indicated by A correspond to the orientation shown in Figs. 5A and 5B; the orientations indicated by B correspond to the orientation shown in Figs. 6A and 6B.

Reference is now made to Fig. 7B, which is a simplified illustration of a variation of the windshield wiper and sprayer assembly of Fig. 7A in which the extreme clockwise orientation of the windshield wiper, wherein the spray assemblies are sealed lies below the windshield. As seen in Fig. 7B, the orientation indicated by A correspond to the orientation shown in Figs. 5A and 5B; the orientations indicated by B correspond to the orientation shown in Figs. 6A and 6B.

Reference is now made to Fig. 8, which is a simplified sectional illustration of a liquid heating assembly useful with the windshield wiper and sprayer assemblies of Figs. 1 - 7B, constructed and operative in accordance with a preferred embodiment of the present invention. It is appreciated that the embodiment of Fig. 8 is not limited in its application to use with any given windshield wiper or sprayer assembly.

Turning to Fig. 8, it is seen that the liquid heating assembly comprises a chassis 300, preferably formed of a plastic material, which also serves as a multichamber housing and defines a liquid heating chamber 302 and a circuitry chamber 304. Liquid heating chamber 302 typically is sealed by a removably threaded base plate 306.

Disposed within liquid heating chamber 302, in sealing engagement with chassis 300, typically by means of a sealing ring 310, is a liquid heating volume defining subassembly 312. Subassembly 312 preferably includes a base portion 314 and a generally cylindrical wall portion 316 which is provided with a plurality of liquid inlet apertures 318 at various heights and azimuthal locations therealong. Base portion 314 and generally cylindrical wall portion 316 preferably define a liquid heating volume 320, in which there are preferably disposed first and second heating elements 322 and 324.

Liquid to be heated is typically received under pressure at an inlet 326 and passes through a conduit 328 into liquid heating chamber 302 and thence through apertures 318 into the liquid heating volume 320. Heated liquid typically exits at the top of the liquid heating chamber 320 via a conduit 330, also typically defined by chassis 300, and passes through a labyrinthine heating unit 332 to an outlet 334.

There exist a number of arrangements for providing pressurized liquid to be heated to inlet 326. In one such arrangement, an optional pump 335, which is not part of the original equipment in the vehicle, pressurizes liquid received via a conduit 336 from a liquid reservoir 337, which typically is part of the original equipment of the vehicle. Liquid from reservoir 337 may reach conduit 336 via a pump 338, which forms part of the original equipment of the vehicle, if that pump is a centrifugal pump. Alternatively, liquid from the reservoir 337 may pass through a one-way valve 339 directly to conduit 336.

It is appreciated that the provision of pump 335 together with the liquid heating assembly is particularly useful in retrofit situations, where modification of the operation and control of pump 338 would be inconvenient or impossible. Pump 335 may also be of value in non-retrofit installations in order to overcome the overall flow resistance of the system.

A liquid temperature sensor 340 preferably is located near the top of the liquid heating chamber 302 adjacent an inlet to conduit 330. Another temperature sensor 342 is preferably located in a wall 344 of the liquid heating chamber 302. Temperature sensor 342 preferably operates a circuit breaker switch 346, which is responsive to exceedance of a predetermined temperature threshold at sensor 342 for automatically interrupting the supply of electrical power from a vehicle battery 348 to the liquid heating assembly 300.

Temperature sensors 340 and 342 provide electrical outputs to electronic heating control circuitry 350, typically located in circuitry chamber 304. Electronic heating control circuitry 350 controls the electrical power, typically via circuit breaker switch 346, to first and second heating elements 322 and 324 and to labyrinthine heating unit 332 and preferably also controls the electrical power to pump 335 and/or to pump 338 which govern the supply of liquid under pressure at inlet 326. Electronic heating control circuitry 350 may also control the electrical power or provide an electrical control signal to windshield wipers (not shown) for producing reciprocating rotation thereof.

Preferably, there is provided an outside air temperature sensor 352 which provides an electric output to electronic heating control circuitry 350, enabling electronic heating control circuitry 350 to automatically control the operation of various components, including inter alia labyrinthine heating unit 332.

A windshield dirt sensor 354 may preferably be provided for automatically initiating operation of the liquid heating assembly when the windshield is dirty.

Additionally the electronic heating control circuitry 350 preferably includes functionality for inhibiting operation of the liquid heating assembly, when the electric power status of the vehicle does not meet predetermined criteria. For this purpose, a battery voltage sensor 356, a battery charging current sensor 358 and a vehicle engine rotation speed sensor 360 preferably provide outputs to electronic heating control circuitry 350.

Further, a circulation pump 362 is preferably provided for circulating heated liquid from liquid heating volume 320 through conduits 364 and 366 to heat external components of the system such as liquid sprayers and windshield wiper blades, as well to heat heated liquid supply conduits, such as a conduit 368 coupled to outlet 334.

Circulation pump 362 may be operated by electronic heating control circuitry 350 automatically in response to ambient outside temperatures, sensed by sensor 352, which fall below a predetermined threshold or on the basis of any other suitable criteria.

Initiation of operation of the liquid heating assembly may be provided by means of a suitable operator controlled switch 370 which provides an output to electronic heating control circuitry 350. Alternatively, an operator controlled switch 372 may cause application of signal modulation to electrical power lines interconnecting battery 348 with electronic heating control circuitry 350. In such a case, electronic heating control circuitry 350 includes functionality for decoding such signal modulation and employing it for controlling functions of the liquid heating assembly, such as initiation of operation thereof.

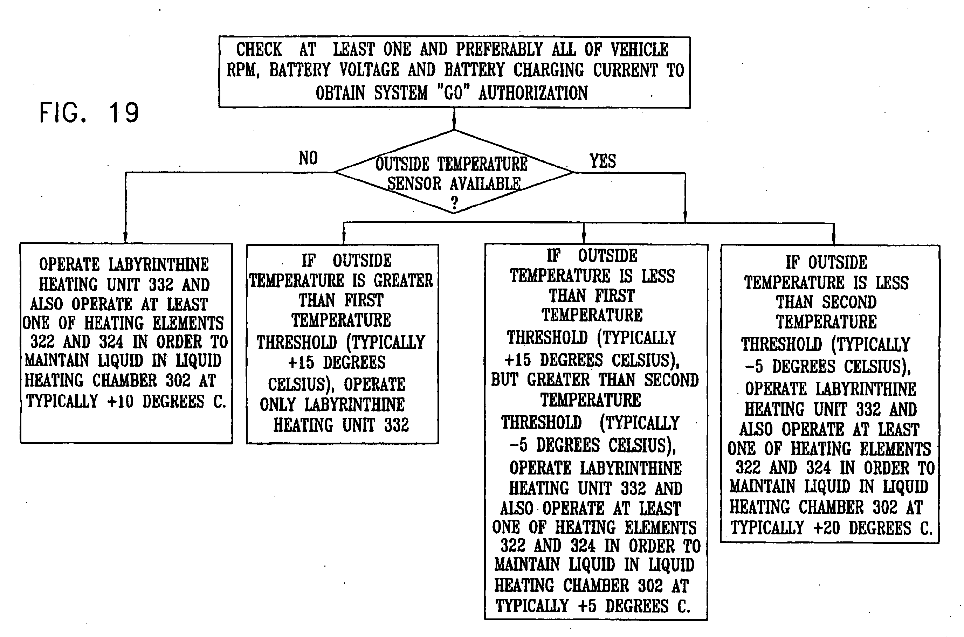

The liquid heating assembly of Fig. 8 may preferably be operated in a standby mode, as described more fully hereinbelow with reference to Fig. 19. The standby mode may be actuated automatically as described hereinbelow and/or may be actuated by a vehicle operator using a standby mode actuation switch 373.

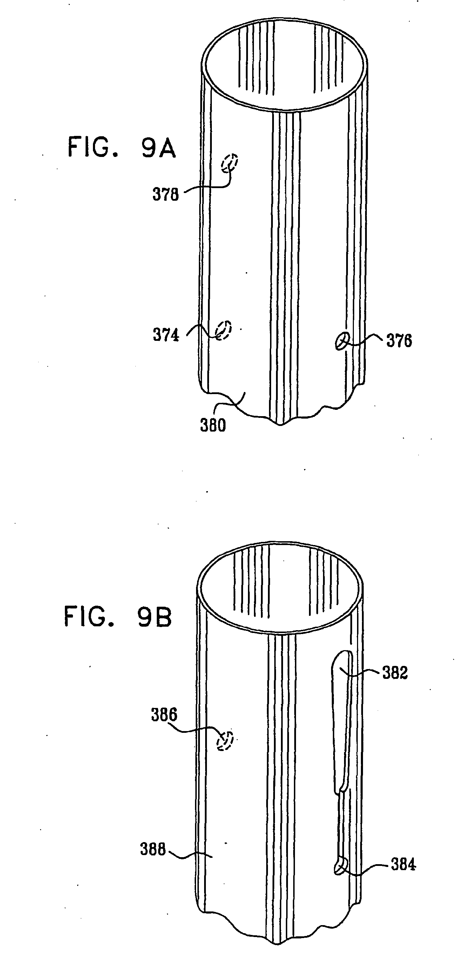

Reference is now made to Figs. 9A and 9B, which are simplified illustrations of two alternative embodiments of a cylindrical wall portion of a liquid heating volume defining subassembly employed in the liquid heating assembly of Fig. 8.

Fig. 9A illustrates one preferred embodiment wherein liquid inlet apertures 374, 376 and 378 are located at various heights and azimuthal locations along a cylindrical wall portion 380. Fig. 9B illustrates an alternative embodiment wherein a generally vertical slot 382 may be provided in addition to one or more apertures 384 and 386 in a cylindrical wall portion 388.

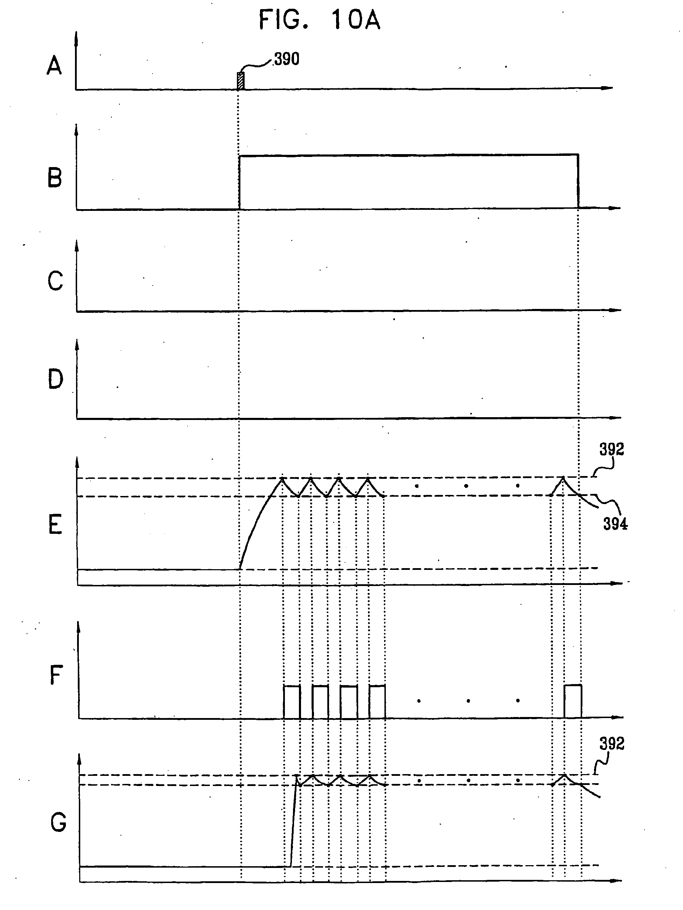

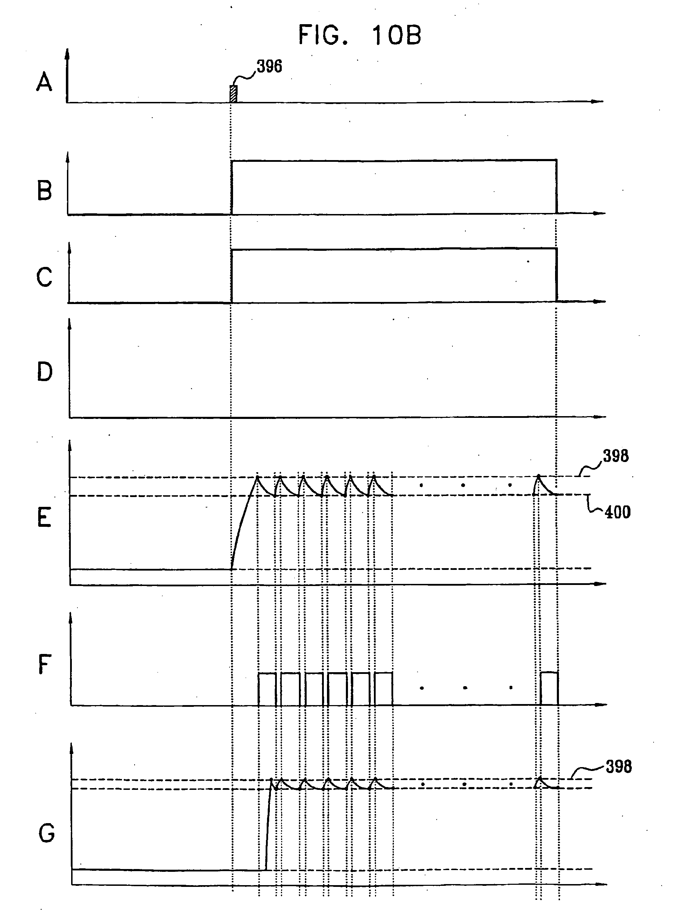

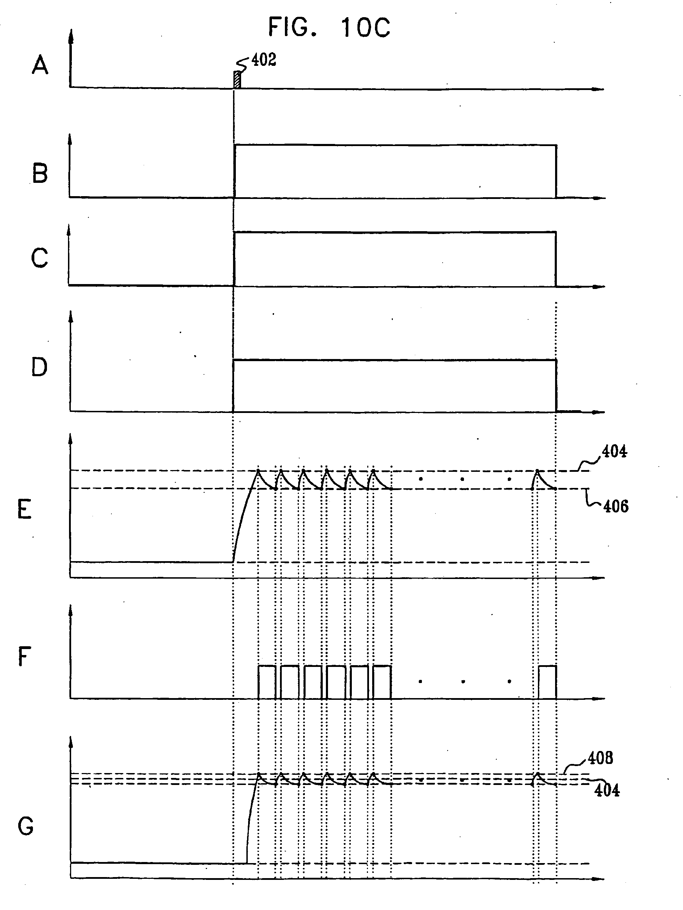

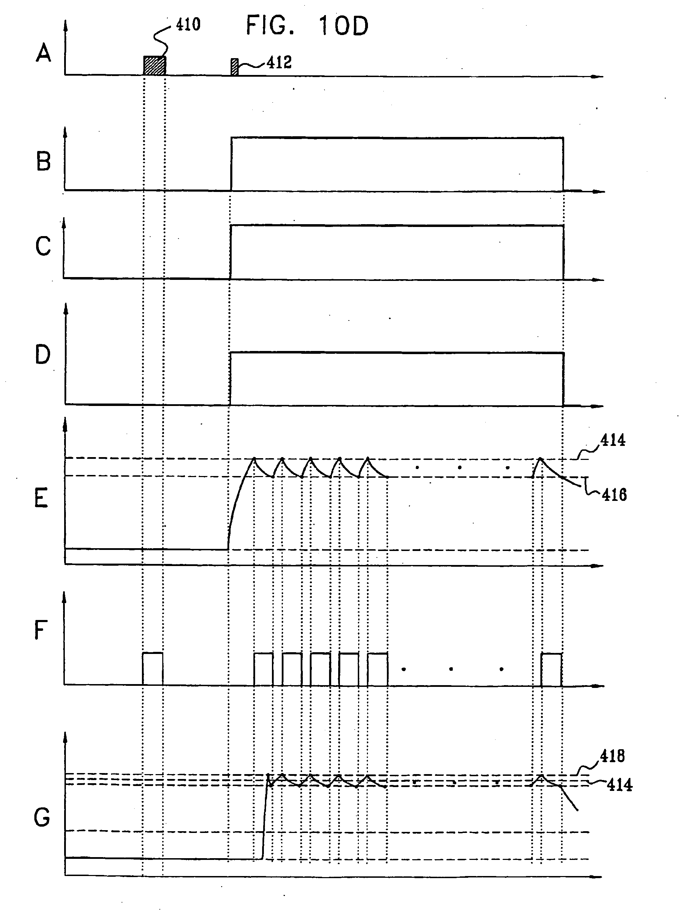

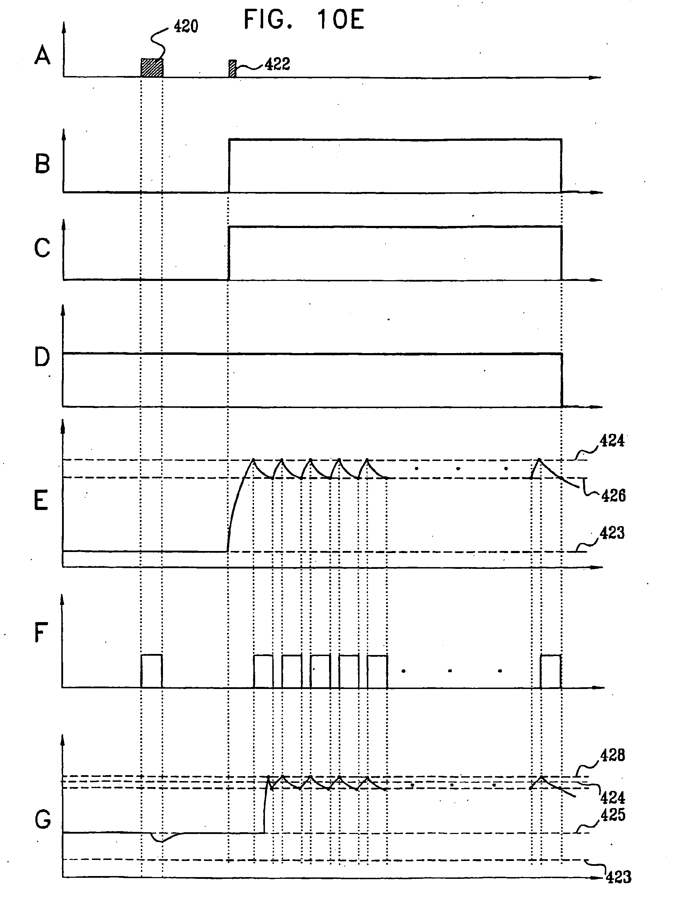

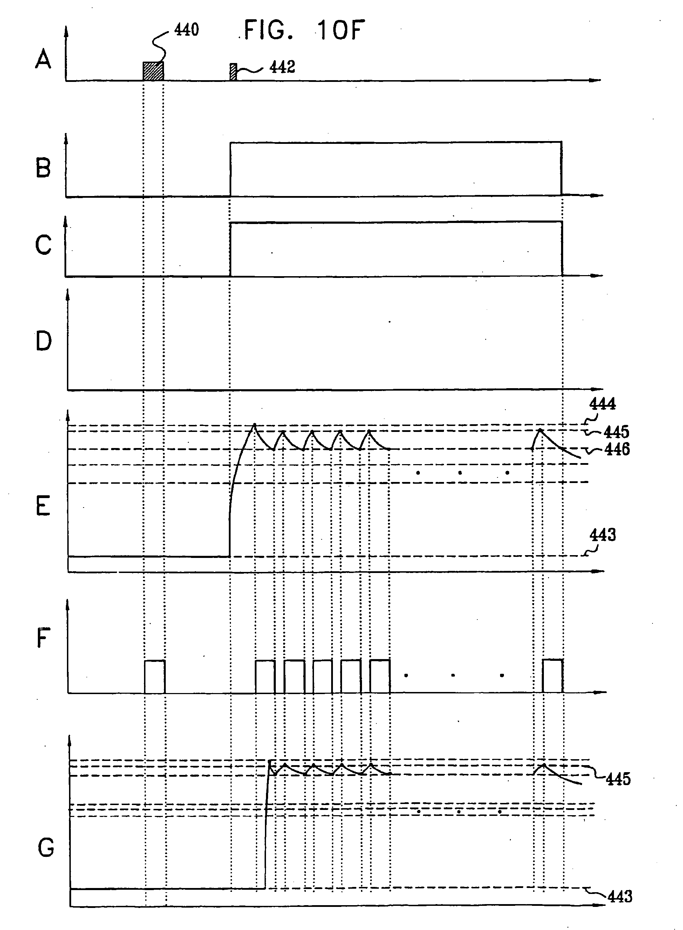

Reference is now made to Figs. 10A, 10B, 10C, 10D, 10E and 10F, which are simplified timing diagrams illustrating various modes of operation of the liquid heating assembly of Fig. 8. Turning to Fig. 10A, it is seen that responsive to a heated liquid spray demand signal 390 (Trace A), typically provided by a vehicle operator pushing a push button, such as switch 370 or 372, associated with electronic heating control circuitry 350, heating element 322 is operated, as shown in Trace B. The duration of operation of heating element 322 is preferably approximately 3 minutes. In this mode of operation, heating element 324 and labyrinthine heating unit 332 are not operated, as indicated in Traces C and D respectively.

The operation of heating element 322 is preferably substantially continuous, as distinct from intermittent, thereby avoiding possible electrical interference resulting from high current switching.

Trace E shows the temperature at the outlet of the liquid heating chamber 302 as measured by sensor 340. It is seen that this temperature reaches a peak threshold value 392 and then periodically varies between the peak threshold value 392 and a somewhat lower threshold value 394. This variation in temperature corresponds to cycles of spraying heated liquid onto a vehicle windshield, which in turn corresponds to supply of unheated liquid to the liquid heating chamber 302, as shown in Trace F.

Preferably, pump 335 and/or pump 338 is actuated when the temperature measured by sensor 340 reaches the peak threshold value 392 and is deactuated when the temperature measured by sensor 340 falls to the lower threshold value 394. In this embodiment, where labyrinthine heating unit 332 is not operated, the temperature of the liquid at outlet 334 (Trace G) is generally the same as that measured by sensor 340. As seen in trace G, the amplitude of variation of the temperature at outlet 334 is typically less than that measured by sensor 340, due to the heat retaining capacity of the labyrinthine heating unit 332, even when not operated.

Turning to Fig. 10B, which shows an alternative mode of operation providing a higher frequency of liquid spraying, it is seen that responsive to a heated liquid spray demand signal 396 (Trace A), typically provided by a vehicle operator pushing one or more push buttons, such as switches 370 arid 372, associated with electronic heating control circuitry 350, heating elements 322 and 324 are operated, as shown in Traces B and C, preferably for a duration of approximately 3 minutes. In this mode of operation, labyrinthine heating unit 332 is not operated, as indicated in Trace D.

The operation of both of heating elements 322 and 324 is preferably substantially continuous, as distinct from intermittent, thereby avoiding possible electrical interference resulting from high current switching.

Trace E shows the temperature at the outlet of the liquid heating chamber 302 as measured by sensor 340. It is seen that this temperature reaches a peak threshold value 398 and then periodically varies between the peak threshold value 398 and a somewhat lower threshold value 400. This variation in temperature corresponds to cycles of spraying heated liquid onto a vehicle windshield, which in turn correspond to supply of unheated liquid to the liquid heating chamber 302, as shown in Trace F.

Preferably, pump 335 and/or pump 338 is actuated when the temperature measured by sensor 340 reaches the peak threshold value 398 and is deactuated when the temperature measured by sensor 340 falls to the lower threshold value 400. In this embodiment, where labyrinthine heating unit 332 is not operated, the temperature of the liquid at outlet 334 (Trace G) is generally the same as that measured by sensor 340. As seen in trace G, the amplitude of variation of the temperature at outlet 334 is typically less than that measured by sensor 340, due to the heat retaining capacity of the labyrinthine heating unit 332, when not operated.

Comparing Figs. 10B and 10A, it is seen that by operating two heating elements, namely heating elements 322 and 324 in the embodiment of Fig. 10B rather than only one heating element 322 as in the embodiment of Fig. 10A, the liquid in liquid heating chamber 302 is heated more quickly, and thus both the frequency of spraying and the amount of liquid sprayed during the typical 3 minute cycle duration increases. It is noted that in this embodiment, as compared with that of Fig. 10A, the heating time of the liquid as measured by sensor 340. is shortened, while the cooling time of the liquid during which operation of pump 335 and/or pump 338 takes place is somewhat lengthened.

Turning to Fig. 10C, which shows a further alternative mode of operation providing generally the same frequency of liquid spraying as in the embodiment of Fig. 10B, it is seen that responsive to a heated liquid spray demand signal 402 (Trace A), typically provided by a vehicle operator pushing one or more push buttons associated with electronic heating control circuitry 350, heating elements 322 and 324 and labyrinthine heating unit 332 are operated, as shown in Traces B, C and D. Actuation of the apparatus in the mode of operation shown in Fig. 10C may be in response to any suitable operator input or may be predetermined.

The operation of both of heating elements 322 and 324 and of labyrinthine heating unit 332 is preferably substantially continuous during each operating cycle, as distinct from intermittent, thereby avoiding possible electrical interference resulting from high current switching. The duration of operation of heating elements 322 and 324 and labyrinthine heating unit 332 is preferably about 3 minutes for each operating cycle.

Trace E shows the temperature at the outlet of the liquid heating chamber 302 as measured by sensor 340. It is seen that this temperature reaches a peak threshold value 404 and then periodically varies between the peak threshold value and a somewhat lower threshold value 406. This variation in temperature corresponds to cycles of spraying heated liquid onto a vehicle windshield, which in turn correspond to supply of unheated liquid to the liquid heating chamber 302, as shown in Trace F. Preferably, pump 335 and/or pump 338 is actuated when the temperature measured by sensor 340 reaches the peak threshold value 404 and is deactuated when the temperature measured by sensor 340 falls to the lower threshold value 406. In this embodiment, where labyrinthine heating unit 332 is operated, the temperature of the liquid at outlet 334 (Trace G), indicated by reference numeral 408, is generally higher than that measured by sensor 340. As seen in trace G, the amplitude of variation of the temperature at outlet 334 is typically less than that measured by sensor 340, due to the operation of the labyrinthine heating unit 332.

Comparing Figs. 10C and 10B, it is seen that by operating the labyrinthine heating unit 332 in the embodiment of Fig. 10C in addition to the heating units 322 and 324 as in the embodiment of Fig. 10B, the liquid at outlet 334 is heated to a temperature peak 408 higher than that measured by sensor 340. This supplemental heating does not affect the frequency of spraying or the amount of liquid sprayed per unit time.

Turning to Fig. 10D, which shows a further alternative mode of operation providing generally the functionality of liquid spraying as in the embodiment of Fig. 10C, it is seen that an immediate spray demand signal, here designated by reference numeral 410, is provided in addition to the heated liquid spray demand signal (Trace A), typically by a vehicle operator pushing an additional push button associated with electronic heating control circuitry 350 or executing any other suitable driver initiated actuation.

In response to the immediate spray demand signal 410, pump 335 and/or pump 338 is operated to provide a supply of pressurized liquid from liquid heating chamber 302 to outlet 334 even before commencement of operation of heating elements 322 and 324.

At any time relative to immediate spray demand signal 410, a heated liquid spray demand signal, here designated by reference numeral 412 (Trace A) may also be provided by an operator pushing one or more push buttons associated with electronic heating control circuitry 350, causing heating elements 322 and 324 and labyrinthine heating unit 332 to be operated, as shown in Traces B, C and D.

As in the embodiment of Fig. 10C, the operation of both of heating elements 322 and 324 and labyrinthine heating unit 332 is substantially continuous, as distinct from intermittent, thereby avoiding possible electrical interference resulting from high current switching. Typically the duration of operation of heating elements 322 and 324 and of labyrinthine heating unit 332 is approximately 3 minutes per operating cycle.

Trace E shows the temperature at the outlet of the liquid heating chamber 302 as measured by sensor 340. It is seen that when the heating elements 322 and 324 are operated, this temperature reaches peak threshold value 414 and then periodically varies between the peak threshold value and a somewhat lower threshold value 416. This variation in temperature corresponds to cycles of spraying heated liquid onto a vehicle windshield, which in turn correspond to supply of unheated liquid to the liquid heating chamber 302, as shown in Trace F.

Preferably, following provision of the heated liquid spray demand signal 412, pump 335 and/or pump 338 is actuated when the temperature measured by sensor 340 reaches the peak threshold value 414 and is deactuated when the temperature measured by sensor 340 falls to the lower threshold value 416. Pump 335 and/or pump 338 is also actuated in response to signal 410, as noted above.

In this embodiment, during operation of labyrinthine heating unit 332, the temperature 418 of the liquid at outlet 334 (Trace G) is higher than that measured by sensor 340. As seen in trace G, the amplitude of variation of the temperature at outlet 334 is typically less than that measured by sensor 340, due to the operation of the labyrinthine heating unit 332

Comparing Figs. 10D and 10C, it is seen that operation of pump 335 and/or pump 338 in response to immediate spray demand signal 410, does not interfere with the operation of the apparatus as described hereinabove with reference to Figs. 10A - 10C.

Comparing Figs. 10D and 10B, it is seen that by operating the labyrinthine heating unit 332 in the embodiment of Fig. 10D in addition to the heating units 322 and 324 as in the embodiment of Fig. 10B, the liquid at outlet 334 is heated to a temperature peak 418 higher than that measured by sensor 340. This supplemental heating does not affect the frequency of spraying or the amount of liquid sprayed per unit time.

Turning to Fig. 10E, which shows a further alternative mode of operation providing generally the functionality of liquid spraying as in the embodiment of Fig. 10D, it is seen that an immediate spray demand signal, here designated by reference numeral 420, is provided in addition to the heated liquid spray demand signal 422 (Trace A), typically by a vehicle operator pushing an additional push button, such as push buttons 370 and 372, associated with electronic heating control circuitry 350 or executing any other suitable driver initiated actuation.

Prior to heated liquid spray demand signal 422, and preferably upon ignition of a vehicle when the ambient outside temperature measured by sensor 352 is below a certain predetermined threshold, the labyrinthine heating unit 332 may be actuated, as shown in Trace D.

In response to the immediate spray demand signal 420, pump 335 and/or pump 338 is operated to provide a supply of pressurized liquid from liquid heating chamber 302 to outlet 334 even before operation of heating elements 322 and 324, as shown by Trace F.

Trace E shows the temperature at the outlet of the liquid heating chamber 302 as measured by sensor 340. It is seen that when the heating elements 322 and 324 are operated, this temperature is raised from an ambient temperature 423 and reaches a peak threshold value 424 and then periodically varies between the peak threshold value and a somewhat lower threshold value 426. This variation in temperature corresponds to cycles of spraying heated liquid onto a vehicle windshield, which in turn correspond to supply of unheated liquid to the liquid heating chamber 302, as shown in Trace F.

Preferably, following provision of the heated liquid spray demand signal 422, pump 335 and/or pump 338 is actuated when the temperature measured by sensor 340 reaches the peak threshold value 424 and is deactuated when the temperature measured by sensor 340 falls to the lower threshold value 426. Pump 335 and/or pump 338 is also actuated in response to signal 420, as noted above.

In this embodiment, during operation of labyrinthine heating unit 332, the temperature of the liquid at outlet 334 (Trace G) is higher than that measured by sensor 340. Due to operation of labyrinthine heating unit 332 from the outset, the base temperature of the liquid at outlet 334 is an elevated temperature indicated by reference numeral 425, higher than ambient temperature 423, prior to immediate spray demand signal 420. During operation of pump 335 and/or pump 338, in response to immediate spray demand signal 420, the temperature of the liquid at outlet 334 drops slightly as unheated liquid is supplied to labyrinthine heating unit 332.

As in the embodiments of Figs. 10C and 10D, the operation of both of heating elements 322 and 324 and labyrinthine heating unit 332 is substantially continuous, as distinct from intermittent, thereby avoiding possible electrical interference resulting from high current switching. Preferably the duration of continuous operation of heating elements 322 and 324 is approximately 3 minutes for each operating cycle.

During the operational cycle responsive to heated liquid spray demand signal 422, the temperature of the liquid at outlet 334 reaches a temperature 428 and the amplitude of variation of the temperature at outlet 334 is typically less than that measured by sensor 340, due to the operation of the labyrinthine heating unit 332.

Comparing Figs. 10E and 10C, it is seen that operation of pump 335 and/or pump 338 in response to immediate spray demand signal 410, does not interfere with the operation of the apparatus as described hereinabove with reference to Figs. 10A - 10C.

Comparing Figs. 10E and 10B, it is seen that by operating the labyrinthine heating unit 332 in the embodiment of Fig. 10E in addition to the heating units 322 and 324 as in the embodiment of Fig. 10B, the liquid at outlet 334 is heated to a temperature peak 428 higher than that measured by sensor 340. This supplemental heating does not affect the frequency of spraying or the amount of liquid sprayed per unit time.

Fig. 10F shows a further alternative mode of operation of the apparatus of Fig. 8, wherein the temperature thresholds applied to the temperature sensed by sensor 340 are varied in accordance with the boiling point of the spray liquid. This mode provides efficient heating of the spray liquid without unnecessarily heating the liquid beyond its boiling point.

It is appreciated that the boiling point of the spray liquid is a function of the concentration of antifreeze and other additives therein. In this embodiment, electronic heating control circuitry 350 is operative to monitor the temperature sensed by sensor 340. Once a relatively stable temperature 444 is reached during continuous operation of one or both of heating elements 322 and 324, indicating that the boiling temperature has been reached, that stable temperature 444 is noted by circuitry 350, which sets a peak temperature threshold value 445 to be preferably a few degrees Celsius below the sensed stable temperature, which is designated by reference numeral 444. In this manner energy and liquid heating of the spray liquid is realized.

It is appreciated that in the illustrated mode of operation, the labyrinthine heating unit 332 is not operated, as shown in Trace D. However, it is envisgaged that in this mode of operation the labyrinthine heating unit 332 may be operated.

Turning to Fig. 10F, it is seen that an immediate spray demand signal, here designated by reference numeral 440, may be provided in addition to a heated liquid spray demand signal 442 (Trace A), typically by a vehicle operator pushing an additional push button, such as push buttons 370 and 372, associated with electronic heating control circuitry 350 or executing any other suitable driver initiated actuation.

In response to the immediate spray demand signal 440, pump 335 and/or pump 338 is operated to provide a supply of pressurized liquid from liquid heating chamber 302 to outlet 334 even before operation of heating elements 322 and 324.

Trace E shows the temperature at the outlet of the liquid heating chamber 302 as measured by sensor 340. It is seen that when the heating elements 322 and 324 are operated, this temperature begins from an ambient temperature 443 and initially reaches stable temperature 444 and thereafter is limited to a peak threshold value 445 and then periodically varies between the peak threshold value 445 and a somewhat lower threshold value 446. This variation in temperature corresponds to cycles of spraying heated liquid onto a vehicle windshield, which in turn correspond to supply of unheated liquid to the liquid heating chamber 302, as shown in Trace F.

Preferably, following provision of the heated liquid spray demand signal 442, pump 335 and/or pump 338 is actuated when the temperature measured by sensor 340 reaches the peak threshold value 445 and is deactuated when the temperature measured by sensor 340 falls to the lower threshold value 446. Pump 335 and/or pump 338 is also actuated in response to signal 440, as noted above.

Preferably, pump 335 and/or pump 338 is actuated when the temperature measured by sensor 340 reaches the peak threshold value 445 and is deactuated when the temperature measured by sensor 340 falls to the lower threshold value 446. In this embodiment, where labyrinthine heating unit 332 is not operated, the temperature of the liquid at outlet 334 (Trace G) is generally the same as that measured by sensor 340. As seen in trace G, the amplitude of variation of the temperature at outlet 334 is typically less than that measured by sensor 340, due to the heat retaining capacity of the labyrinthine heating unit 332, when not operated.

As in the mode of operation of Fig. 10B, the operation of both of heating elements 322 and 324 is substantially continuous, as distinct from intermittent, thereby avoiding possible electrical interference resulting from high current switching. The duration of operation of heating elements 322 and 324 is preferably approximately 3 minutes for each operating cycle thereof.

Comparing Figs. 10F and 10E, it is seen that operation of the apparatus of Fig. 8 in a variable peak temperature threshold mode in response to the sensed boiling point of the spray liquid which may vary over time does not interfere with the operation of the apparatus as described hereinabove with reference to Figs. 10A - 10E.

Comparing Figs. 10F and 10C, it is seen that operation of pump 335 and/or pump 338 in response to immediate spray demand signal 440, does not interfere with the operation of the apparatus as described hereinabove with reference to Figs. 10A - 10C.

It is appreciated that operation of the apparatus of Fig. 8 in a variable peak temperature threshold mode causes the peak temperature 445 to be a function of the composition of the liquid. Peak temperature 445 may thus be greater or less than peak temperature 398 in Fig. 10B.

Reference is now made to Fig. 19, which is a simplified flow chart illustration of standby operation of the liquid heating assembly of Fig. 8. As seen in Fig. 19, the electronic heating control circuitry 350 preferably operates in a standby mode in response to the status of the vehicle, as indicated by sensors 356, 358 and 360 and in response to the outside temperature, as indicated by sensor 352. Alternatively or additionally, standby mode operation of electronic heating control circuitry 350 may be provided by actuation of switch 373 by a vehicle operator.

Preferably, upon vehicle ignition, electronic heating control circuitry 350 checks at least one and preferably all of the following vehicle characteristics: vehicle battery voltage, as measured by sensor 356; vehicle battery charging current, as measured by sensor 358 and vehicle engine rotation speed, as measured by sensor 360. Preferable minimum vehicle characteristic thresholds are as follows:
vehicle battery voltage: 12.5 Volts;
vehicle battery charging current: 15 Ampere
vehicle engine rotation speed: 1000 RPM

If the minimum vehicle characteristic thresholds are met, a "GO" authorization is provided and the liquid heating assembly is operated in a standby mode as follows:

If an outside temperature sensor, such as sensor 352 is not available, preferably electronic heating control circuitry 350 operates labyrinthine heating unit 332 and also operates at least one of heating elements 322 and 324 in order to maintain the liquid in liquid heating chamber 302 at typically +10 degrees C.

If an outside temperature sensor, such as sensor 352, is available, and the outside temperature measured thereby is greater than a first temperature threshold, typically +15 degrees C, preferably only labyrinthine heating unit 332 is operated.

If, the outside temperature measured by the outside temperature sensor 352 is less than the first temperature threshold, but greater than a second temperature threshold, typically -5 degrees C, preferably the labyrinthine heating unit 332 is operated and at least one of heating elements 322 and 324 are additionally operated in order to maintain the liquid in liquid heating chamber 302 at typically +5 degrees C.

If, the outside temperature measured by the outside temperature sensor 352 is less than the second temperature threshold, preferably the labyrinthine heating unit 332 is operated and at least one of heating elements 322 and 324 are also operated in order to maintain the liquid in liquid heating chamber 302 at typically +20 degrees C.

It is noted that preferably, when the liquid heating assembly of Fig. 8 is operated by electronic temperature control circuitry 350 in the standby mode, as described hereinabove, manual operations, such as an immediate spray demand and initiation of the normal operation of the liquid heating assembly may be initiated by a vehicle operator.

## Claims

1. A windshield washing system comprising:
a windshield wiper and sprayer assembly (110, 210) comprising:
a windshield wiper assembly (114, 214);
a windshield wiper driver assembly operative to move said windshield wiper assembly (114, 214) in rotational and linear motion along a vehicle windshield;
a windshield sprayer assembly (116, 216) mounted on said windshield wiper assembly (114, 214), said windshield sprayer assembly (116, 216) comprising at least one sprayer;
**characterised in that** the at least one sprayer comprises:
a sprayer housing (136, 237); and
a sprayer housing closure (138, 238) arranged for selectable positioning relative to said sprayer housing (136, 237) and to assume a first position permitting spraying and a second position not permitting spraying; and **in that** the windshield washing system further comprises:
a windshield sprayer assembly positioning assembly operative in response to said linear motion of said windshield wiper assembly (114, 214) for selectably positioning said sprayer housing closure (138, 238) relative to said sprayer housing (136, 237) in either of said first and second positions in accordance with the rotational position of the windshield wiper assembly (114, 214).

2. A windshield washing system according to claim 1 and wherein said windshield wiper and sprayer assembly (110, 210) comprises a base (100, 200) which is arranged for rotation about a rotation axis (104, 204).

3. A windshield washing system according to claim 2 and wherein said windshield wiper and sprayer assembly (110, 210) comprises a base mounted housing (108, 208), cooperating with said base (100, 200) and arranged for driven linear motion relative thereto.

4. A windshield washing system according to claim 3 and wherein said at least one sprayer comprises at least one heated liquid sprayer, which undergoes linear and rotational motion together with said base mounted housing (108, 208) and which receives pressurized fluid for spraying via fluid conduits (118, 218).

5. A windshield washing system according to any of claims 1 to 4 and wherein said windshield sprayer assembly (116, 216) comprises a pressurized fluid chamber (140, 240), which is defined between said sprayer housing (136, 237) and said sprayer housing closure (138, 238), said pressurized fluid chamber (140, 240) receiving pressurized fluid to be sprayed from a fluid conduit (118, 218) via an inlet pipe (142, 242).

6. A windshield washing system according to claim 5 and wherein said sprayer housing closure (138, 238) comprises a cap which may be sealed and may be held tight against a corresponding sealing surface (146, 246) of said sprayer housing (136, 237).

7. A windshield washing system according to claim 6 and wherein said cap (138, 238) is arranged to be sealed and to be held tight by a spring loaded shaft assembly (150, 250), which includes a compression spring (162, 262).

8. A windshield washing system according to claim 6 or claim 7 and wherein said sprayer housing closure (138, 238) is normally positioned relative to said sprayer housing (136, 237) in said first position permitting spraying.

9. A windshield washing system according to any of claims 5-8 and wherein said windshield sprayer assembly positioning assembly comprises a pin (120) fixed to said base (100), said pin (120) slidingly engaging an anchor element slot (126) formed in an anchor element (128) to provide a lost motion mechanism, said lost motion mechanism producing a liquid spray by allowing said pressurized fluid to escape from said pressurized fluid chamber (140).

10. A windshield washing system according to any of claims 7-9 and wherein sufficient liquid pressure applied to said pressurized fluid chamber (140, 240) may overcome the spring force of said compression spring (162, 262) and permit spraying even when the sprayer housing (136, 237) is in said second position.

11. A windshield washing system according to any of claims 1 to 10 and wherein said at least one sprayer includes an electrical heating element (180) for heating thereof.

12. A method for windshield washing comprising:
providing a windshield wiper assembly (114, 214) having mounted thereon a windshield sprayer assembly (116, 216) including at least one sprayer including a sprayer housing (136, 237) and a sprayer housing closure (138, 238) movable relative to said sprayer housing (136, 237), said sprayer housing closure (138, 238) providing a first position permitting spraying and a second position not permitting spraying;
moving said windshield wiper assembly (114, 214) in rotational and linear motion along a vehicle windshield; and
selectably positioning said sprayer housing closure (138, 238) relative to said sprayer housing (136, 237) in either of said first and second positions in response to said linear motion of said windshield wiper assembly (114, 214) in accordance with the rotational position of the windshield wiper assembly (114, 214).

## Patentansprüche

1. Windschutzscheibenwaschsystem, das aufweist:
eine Scheibenwischer- und Spritzanlagenbaugruppe (110, 210), die aufweist:
eine Scheibenwischerbaugruppe (114, 214);
eine Scheibenwischerantriebsteilbaugruppe, die funktionsfähig ist, um die Scheibenwischerbaugruppe (114, 214) in einer Rotations- und linearen Bewegung längs einer Windschutzscheibe eines Fahrzeuges zu bewegen;
eine Windschutzscheibenspritzanlagenbaugruppe (116, 216), die auf der Scheibenwischerbaugruppe (114, 214) montiert ist, wobei die Windschutzscheibenspritzanlagenbaugruppe (116, 216) mindestens eine Spritzanlage aufweist;
**dadurch gekennzeichnet, dass** die mindestens eine Spritzanlage aufweist:
ein Spritzanlagengehäuse (136, 237); und einen Spritzanlagengehäuseverschluss (138, 238), der für ein wählbares Positionieren relativ zum Spritzanlagengehäuse (136, 237) angeordnet ist, und um eine erste Position, die ein Spritzen gestattet, und eine zweite Position einzunehmen, die ein Spritzen nicht gestattet; und **dadurch**, dass das Windschutzscheibenwaschsystem außerdem aufweist:
eine Positionierbaugruppe für die Windschutzscheibenspritzanlagenbaugruppe, die als Reaktion auf die lineare Bewegung der Scheibenwischerbaugruppe (114, 214) für das wählbare Positionieren des Spritzanlagengehäuseverschlusses (138, 238) relativ zum Spritzanlagengehäuse (136, 237) in einer von der ersten und der zweiten Position in Übereinstimmung mit der Rotationsposition der Scheibenwischerbaugruppe (114, 214) funktionsfähig ist.

2. Windschutzscheibenwaschsystem nach Anspruch 1, und bei dem die Scheibenwischer- und Spritzanlagenbaugruppe (110, 210) eine Basis (100, 200) aufweist, die für eine Drehung um eine Rotationsachse (104, 204) angeordnet ist.

3. Windschutzscheibenwaschsystem nach Anspruch 2, und bei dem die Scheibenwischer- und Spritzanlagenbaugruppe (110, 210) ein an der Basis montiertes Gehäuse (108, 208) aufweist, das mit der Basis (100, 200) zusammenwirkt und für eine lineare Antriebsbewegung relativ dazu angeordnet ist.

4. Windschutzscheibenwaschsystem nach Anspruch 3, und bei dem die mindestens eine Spritzanlage mindestens eine erwärmte Flüssigkeitsspritzanlage aufweist, die eine lineare und Rotationsbewegung zusammen mit dem an der Basis montierten Gehäuse (108, 208) erfährt, und die Druckfluid für das Spritzen mittels Fluidleitungen (118, 218) aufnimmt.

5. Windschutzscheibenwaschsystem nach einem der Ansprüche 1 bis 4, und bei dem die Windschutzscheibenspritzanlagenbaugruppe (116, 216) eine Druckfluidkammer (140, 240) aufweist, die zwischen dem Spritzanlagengehäuse (136, 237) und dem Spritzanlagengehäuseverschluss (138, 238) definiert wird, wobei die Druckfluidkammer (140, 240) Druckfluid, das aus einer Fluidleitung (118, 218) verspritzt werden soll, über ein Einlassrohr (142, 242) aufnimmt.

6. Windschutzscheibenwaschsystem nach Anspruch 5, und bei dem der Spritzanlagengehäuseverschluss (138, 238) eine Kappe aufweist, die abgedichtet und dicht anliegend gegen eine entsprechende Dichtungsfläche (146, 246) des Spritzanlagengehäuses (136, 237) gehalten werden kann.

7. Windschutzscheibenwaschsystem nach Anspruch 6, und bei dem die Kappe (138, 238) so angeordnet ist, dass sie abgedichtet und dicht anliegend mittels einer federbelasteten Wellenbaugruppe (150, 250) gehalten wird, die eine Druckfeder (162, 262) umfasst.

8. Windschutzscheibenwaschsystem nach Anspruch 6 oder Anspruch 7, und bei dem der Spritzanlagengehäuseverschluss (138, 238) normalerweise relativ zum Spritzanlagengehäuse (136, 237) in der ersten Position positioniert ist, die ein Spritzen gestattet.

9. Windschutzscheibenwaschsystem nach einem der Ansprüche 5 bis 8, und bei dem die Positionierbaugruppe für die Windschutzscheibenspritzanlagenbaugruppe einen Stift (120) aufweist, der an der Basis (100) befestigt ist, wobei der Stift (120) mit einem in einem Verankerungselement (128) ausgebildeten Verankerungselementschlitz (126) verschiebbar in Eingriff kommt, um einen Leerlaufmechanismus zu liefern, wobei der Leerlaufmechanismus ein Spritzen von Flüssigkeit bewirkt, indem gestattet wird, dass Druckfluid aus der Druckfluidkammer (140) austritt.

10. Windschutzscheibenwaschsystem nach einem der Ansprüche 7 bis 9, und bei dem ein ausreichender Flüssigkeitsdruck, der in der Druckfluidkammer (140, 240) zur Anwendung gebracht wird, die Federkraft der Druckfeder (162, 262) überwinden kann und ein Spritzen gestattet, selbst wenn sich das Spritzanlagengehäuse (136, 237) in der zweiten Position befindet.

11. Windschutzscheibenwaschsystem nach einem der Ansprüche 1 bis 10, und bei dem die mindestens eine Spritzanlage ein elektrisches Heizelement (180) für deren Erwärmung umfasst.

12. Verfahren für das Waschen der Windschutzscheibe, das die folgenden Schritte aufweist:
Bereitstellen einer Scheibenwischerbaugruppe (114, 214), die darauf eine Windschutzscheibenspritzanlagenbaugruppe (116, 216) montiert aufweist, die mindestens eine Spritzanlage umfasst, die ein Spritzanlagengehäuse (136, 237) und einen Spritzanlagengehäuseverschluss (138, 238), relativ zum Spritzanlagengehäuse (136, 237) beweglich, umfasst, wobei der Spritzanlagengehäuseverschluss (138, 238) eine erste Position, die ein Spritzen gestattet, und eine zweite Position bereitstellt, die ein Spritzen nicht gestattet;
Bewegen der Scheibenwischerbaugruppe (114, 214) in einer Rotations- und linearen Bewegung entlang einer Windschutzscheibe des Fahrzeuges; und
wählbares Positionieren des Spritzanlagengehäuseverschlusses (138, 238) relativ zum Spritzanlagengehäuse (136, 237) in einer von der ersten und der zweiten Position als Reaktion auf die lineare Bewegung der Scheibenwischerbaugruppe (114, 214) in Übereinstimmung mit der Rotationsposition der Scheibenwischerbaugruppe (114, 214).

## Revendications

1. Système de lave-glace, comprenant :
un assemblage d'essuie-glace et de pulvérisateur (110, 210), comprenant :
un assemblage d'essuie-glace (114, 214) ;
un assemblage d'entraînement de l'essuie-glace, servant à déplacer ledit assemblage d'essuie-glace (114, 214) par un déplacement rotatif et linéaire le long d'un pare-brise du véhicule ;
un assemblage de pulvérisateur du pare-brise (116, 216), monté sur ledit assemblage d'essuie-glace (114, 214), ledit assemblage de pulvérisateur du pare-brise (116, 216) comprenant au moins un pulvérisateur ;
**caractérisé en ce que** le au moins un pulvérisateur comprend :
un boîtier de pulvérisateur (136, 237) ; et
une fermeture du boîtier du pulvérisateur (138, 238) agencé en vue d'un positionnement sélectif par rapport audit boîtier du pulvérisateur (136, 237) et de sorte à assumer une première position, permettant la pulvérisation, et une deuxième position, ne permettant pas la pulvérisation ; et **en ce que** le système de lave-glace comprend en outre :
un assemblage de positionnement de l'assemblage de pulvérisateur du pare-brise, pouvant être actionné en réponse audit déplacement linéaire dudit assemblage d'essuie-glace (114, 214) pour positionner de manière sélective ladite fermeture du boîtier du pulvérisateur (138, 238) par rapport audit boîtier du pulvérisateur (136, 237) dans l'une desdites première et deuxième positions, en fonction de la position de rotation de l'assemblage d'essuie-glace (114, 214).

2. Système de lave-glace selon la revendication 1, dans lequel ledit assemblage d'essuie-glace et de pulvérisateur (110, 210) comprend une base (100, 200) destinée à tourner sur un axe de rotation (104, 204).

3. Système de lave-glace selon la revendication 2, dans lequel ledit assemblage d'essuie-glace et de pulvérisateur (110, 210) comprend un boîtier monté sur une base (108, 208), coopérant avec ladite base (100, 200) et agencé de sorte à effectuer un déplacement linéaire par rapport à celle-ci.

4. Système de lave-glace selon la revendication 3, dans lequel ledit au moins un pulvérisateur comprend au moins un pulvérisateur d'un liquide chauffé, soumis à un déplacement linéaire et rotatif, ensemble avec ledit boîtier monté sur la base (108, 208), et recevant un fluide sous pression en vue d'une pulvérisation par des conduits de fluide (118, 218).

5. Système de lave-glace selon l'une quelconque des revendications 1 à 4, dans lequel ledit assemblage de pulvérisateur du pare-brise (116, 216) comprend une chambre de fluide sous pression (140, 240) définie entre ledit boîtier du pulvérisateur (136, 237) et ladite fermeture du boîtier du pulvérisateur (138, 238), ladite chambre de fluide sous pression (140, 240) recevant du fluide sous pression devant être pulvérisé à partir d'un conduit de fluide (118, 218) par un tuyau d'entrée (142, 242).

6. Système de lave-glace selon la revendication 5, dans lequel ladite fermeture du boîtier du pulvérisateur (138, 238) comprend un capuchon pouvant être scellé et pouvant être retenu fermement contre une surface d'étanchéité correspondante (146, 246) dudit boîtier du pulvérisateur (136, 237).

7. Système de lave-glace selon la revendication 6, dans lequel ledit capuchon (138, 238) est agencé de sorte à être scellé et retenu fermement par un assemblage d'arbre chargé par ressort (150, 250), englobant un ressort de compression (162, 262).

8. Système de lave-glace selon les revendications 6 ou 7, dans lequel ladite fermeture du boîtier du pulvérisateur (138, 238) est normalement positionnée par rapport audit boîtier du pulvérisateur (136, 237) dans ladite première position permettant la pulvérisation.

9. Système de lave-glace selon l'une quelconque des revendications 5 à 8, dans lequel ledit assemblage de positionnement de l'assemblage de pulvérisation du pare-brise comprend une goupille (120) fixée sur ladite base (100), ladite goupille (120) s'engageant de manière coulissante dans une fente d'un élément d'ancrage (126)formée dans un élément d'ancrage (128) pour établir un mécanisme de mouvement à vide, ledit mécanisme de mouvement à vide produisant une pulvérisation de liquide en permettant l'échappement dudit fluide sous pression de ladite chambre de fluide sous pression (140).

10. Système de lave-glace selon l'une quelconque des revendications 7 à 9, dans lequel une pression de liquide suffisante appliquée à ladite chambre de fluide sous pression (140, 240) peut surmonter la force de ressort dudit ressort de compression (162, 262) et permettre la pulvérisation, même lorsque le boîtier du pulvérisateur (136, 237) se trouve dans ladite deuxième position.

11. Système de lave-glace selon l'une quelconque des revendications 1 à 10, dans lequel ledit au moins un pulvérisateur englobe un élément de chauffage électrique (180) pour assurer son chauffage.

12. Procédé de lavage d'un pare-brise, comprenant les étapes ci-dessous :
fourniture d'un assemblage d'essuie-glace (114, 214), comportant un assemblage de pulvérisateur du pare-brise (116, 216) qui y est monté, englobant au moins un pulvérisateur englobant un boîtier de pulvérisateur (136, 237) et une fermeture du boîtier du pulvérisateur (138, 238), pouvant être déplacée par rapport audit boîtier du pulvérisateur (136, 237), ladite fermeture du boîtier du pulvérisateur (138, 238) pouvant assumer une première position, permettant la pulvérisation, et une deuxième position, ne permettant pas la pulvérisation ;
déplacement dudit assemblage d'essuie-glace (114, 214) par un déplacement rotatif et linéaire le long d'un pare-brise du véhicule ; et
positionnement sélectif de ladite fermeture du boîtier du pulvérisateur (138, 238) par rapport audit boîtier du pulvérisateur (136, 237) dans l'une desdites première et deuxième positions, en réponse audit déplacement linéaire dudit assemblage d'essuie-glace (114, 214), en fonction de la position de rotation de l'assemblage d'essuie-glace (114, 214).
